(19) Europäisches Patentamt
European Patent Office
Office européen des brevets

(11) **EP 2 774 496 A1**

(12) **EUROPEAN PATENT APPLICATION**

(43) Date of publication:
**10.09.2014  Bulletin 2014/37**

(51) Int Cl.:
*A23L 1/39* ^(2006.01)    *A23D 7/005* ^(2006.01)
*A23L 1/035* ^(2006.01)   *A23L 1/212* ^(2006.01)
*A23L 1/227* ^(2006.01)   *A23L 1/24* ^(2006.01)

(21) Application number: **13158335.3**

(22) Date of filing: **08.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Unilever N.V.
3013 AL Rotterdam (NL)**

(72) Inventors:
• **Da Fonseca Selgas Martins, Sara Isabel
3133 AT Vlaardingen (NL)**

• **van der Hijden, Hendrikus Theodorus Wilhelmus
3133 AT Vlaardingen (NL)**
• **Ihechere, Elizabeth
3133 AT Vlaardingen (NL)**
• **Vreeker, Robert
3133 AT Vlaardingen (NL)**

(74) Representative: **Corsten, Michael Allan
Unilever N.V.
Unilever Patent Group
Olivier van Noortlaan 120
3133 AT Vlaardingen (NL)**

(54)  **Method of preparing an emulsifying agent and emulsifying agent so obtained**

(57)  The present invention provides an emulsifying agent that can suitably be used to stabilize oil-in-water emulsions and that is prepared from natural ingredients without the use of organic solvents or chemical synthesis.

The invention provide a process of preparing such an emulsifying agent, said process comprising:
• providing a plant-derived starting material containing:
o reducing monosaccharides;
o phenolic compounds;
o free amino acids;
o pectin; and
o of water;

• heating the starting material to a temperature of at least 60°C for at least one minute to produce an emulsifying agent;

wherein at least 95% of the dry matter contained in the starting material is plant-derived; and wherein the absorbance at 405 nm of the emulsifying agent is at least 0.05 units higher than that of the starting material.

EP 2 774 496 A1

**Description**

TECHNICAL FIELD OF THE INVENTION

The present invention relates to a process of preparing an emulsifying agent, said process comprising providing a starting material containing (i) reducing monosaccharides, (ii) phenolic compounds, (iii) free amino acids, (iv) pectin and (v) water, and heating the starting material to produce an emulsifying agent.

The invention also relates to an emulsifying agent that is obtained by this method and to the use of such emulsifying agent in oil-in-water emulsions.

BACKGROUND OF THE INVENTION

Food products in the form of edible emulsions are well known in the art. Depending on which substance is considered as the continuous phase, edible emulsions may exist in the form of water-in-oil emulsions (wherein an oil and/or fat is the continuous phase) or oil-in-water (oil and/or fat as dispersed phase) emulsions. Multiple emulsions are also possible, including a "water-in-oil-in-water" emulsion and an "oil-in-water-in-oil" emulsion. Examples of oil-in-water emulsions are dressings, mayonnaise, soups, sauces, dips and oil-containing drinks, whereas margarine and margarine-like spreads are examples of water-in-oil emulsions.

The stability of oil-in-water emulsions is affected adversely by a number of different changes that may occur in the structure of these emulsions as time progresses. Basically, four ways in which the structure of an oil-in-water emulsion can change can be distinguished:

Creaming, wherein an droplets collect in a concentrated layer at the top of an emulsion, without a change in droplet size (or droplet size distribution). This phenomenon results from external force fields, usually gravitational, acting on the system.

Coalescence, wherein droplets within a close-packed array resulting from e.g. creaming, merge to form larger droplets. This results in a change of the initial droplet size distribution. The limiting state is the complete separation of the emulsion into the two immiscible bulk liquids.

Ostwald ripening, wherein molecules in the dispersed phase diffuse from small droplets to large ones through the continuous phase, resulting in an increase of the average droplet size, i.e., larger droplets will form at the expense of the smaller droplets.

Phase inversion, wherein an oil-in-water emulsion changes into a water-in-oil emulsion. This may be brought about by a change in temperature or concentration of one of the components or by the addition of a new component to the system.

If oil-in-water emulsions are stored for prolonged periods of time under varying temperature conditions, as is the case for retail products, the aforementioned destabilizing processes have to be slowed down. In order to achieve this, emulsifiers and water structurants are commonly employed in these emulsions. Typically, these emulsifiers and water structurants are well-defined ingredients that are industrially prepared from natural ingredients, using chemical solvents and/or chemical reactions (e.g. esterification). Food laws in most countries require that the presence of these ingredients in food products is mentioned on the food label. In European countries many of these ingredients are referred to on the product label by their so-called "E-number".

The use of these emulsifiers in industrially produced edible oil-in-water emulsions has the disadvantage that an increasing number of consumers regard these ingredients as undesirable 'artificial' additives. There is an ongoing effort in the food industry to reduce the number of additives that are being used in commercial food products. In addition, food manufacturers are looking for ways of replacing 'artificial' ingredients by natural ingredients from renewable, sustainable sources.

WO 2010/110269 discloses a browning reaction product that can be used as a substitute for an emulsifier or a surfactant, and that is prepared by heating an aqueous solution of a mixture of a saccharide with an amino acid. Also disclosed is a fat-based food which is prepared by adding a fat to said browning reaction product followed by emulsification or solubilization.

GB 1 273 124 discloses a method for preparing a caramel color, wherein a fruit juice and a caramellization catalyst are heated under pressure. An example is provided wherein berries having a high polysaccharide content are hydrolyzed at acid pH and subjected to prolonged heating in the presence of ammonium catalysts.

Adams et al. (Thermal Degradation Studies of Food Melanoidins, J. Agric. Food Chem. 2005, 53, 4136-4142) describe how tomato melanoidins were prepared by different procedures. Canned tomatoes were subjected to a relatively mild heat treatment of 8 h at 90 °C and to a severe heat treatment of 40 h at 105 °C, both under reflux conditions.

It is an object of the present invention to provide an emulsifying agent that can suitably be used to stabilize oil-in-water emulsions and that is prepared from natural ingredients without the use of organic solvents or chemical synthesis.

SUMMARY OF THE INVENTION

The inventors have discovered that an emulsifying agent meeting the aforementioned *desiderata* can be prepared by a process that comprises the heating of a starting material containing one or more reducing monosaccharides, one or more phenolic compounds selected from flavonols, flavanols, anthocyanidins, flavones, flavanones, isoflavones, stilbenes, lignans, phenolic acids and their glycosides, one or more amino acids, pectin and water, wherein the heating conditions applied result in the formation of substantial quantities of melanoidins, as evidenced by brown colouring.

Thus, the present invention pertains to a process of preparing an emulsifying agent, said process comprising:

- providing a plant-derived starting material containing:

  ○ 3-40 wt.% of one or more reducing monosaccharides;
  ○ 0.005-10 wt.% of one or more phenolic compounds, said phenolic compounds being selected from flavonols, flavanols, flavanones, flavones, isoflavones, stilbenes, lignans, phenolic acids, anthocyanidins, glycosides of these substances and combinations thereof;
  ○ 0.02-2.5 wt.% of one or more free amino acids;
  ○ 0.03-10 wt.% of pectin; and
  ○ 50-95 wt.% of water;

  wherein the w/w (weight/weight) ratio of pectin to the one or more reducing monosaccharides is at least 1:100, and the w/w ratio of the one or more phenolic compounds to the one or more reducing monosaccharides is at least 1:800;
- heating the starting material to a temperature of at least 60 °C for at least one minute to produce an emulsifying agent;

wherein at least 95% of the dry matter contained in the starting material is plant-derived and less than 50% of the dry matter contained in the starting material is derived from grapes; and wherein the absorbance at 405 nm ($A_{405}$) of the emulsifying agent is at least 0.05 units higher than that of the starting material, said absorbance being measured in a water-diluted sample having a dry matter content of 0.5 wt.%, using a cuvette having an optical pathlength of 10 mm.

Although the inventors do not wish to be bound by theory, it is believed that heating of the starting material composition as defined above results in the formation of special melanoidins that are capable of stabilizing edible emulsions by acting as an oil-in-water emulsifier. The heating conditions employed in the present process are believed to cause progressive incorporation of phenolic compounds into the melanoidins skeleton, thereby producing a phenolic compound-melanoidin adduct that has excellent emulsifying properties. In order to produce appreciable levels of these emulsifying adduct, the starting material employed in the present process has to contain a substantial amount of water, appreciable levels of reducing monosaccharide and significant amounts of both free amino acids and the aforementioned phenolic compounds.

The starting material employed in the present process may suitably comprise plant-derived materials such as juice, paste, pulp or serum. These materials typically contain appreciable levels of pectin.

Another aspect of the invention relates to an emulsifying agent that is obtained by the preparation process described herein.

The invention further provides a method of preparing an oil-in-water emulsion comprising 1-40 wt.% of a dispersed oil phase and 60-99 wt.% of a continuous aqueous phase, said method comprising adding the above mentioned emulsifying agent in a concentration of 0.1-10 %, calculated as dry matter of the emulsifying agent, by weight of the final emulsion.

DETAILED DESCRIPTION OF THE INVENTION

Accordingly, a first aspect of the invention relates to process of preparing an emulsifying agent, said process comprising:

- providing a plant-derived starting material containing:

  ○ 3-40 wt.% of one or more reducing monosaccharides;
  ○ 0.005-10 wt.% of one or more phenolic compounds, said phenolic compounds being selected from flavonols, flavanols, flavanones, flavones, isoflavones, stilbenes, lignans, phenolic acids, anthocyanidins, glycosides of these substances and combinations thereof;
  ○ 0.02-2.5 wt.% of one or more free amino acids;

○ 0.03-10 wt.% of pectin; and
○ 50-95 wt.% of water;

wherein the w/w ratio of pectin to the one or more reducing monosaccharides is at least 1:100, and the w/w ratio of the one or more phenolic compounds to the one or more reducing monosaccharides is at least 1:800;
• heating the starting material to a temperature of at least 60 °C for at least one minute to produce an emulsifying agent;

wherein at least 95% of the dry matter contained in the starting material is plant-derived and less than 50% of the dry matter contained in the starting material is derived from grapes; and wherein the absorbance at 405 nm ($A_{405}$) of the emulsifying agent is at least 0.05 units higher than that of the starting material, said absorbance being measured in a water-diluted sample having a dry matter content of 0.5 wt.%, using a cuvette having a pathlength of 10 mm.

The term "plant-derived starting material" as used herein refers to a material that is obtained from or isolated from a plant material without chemical modification. The plant-derived material may suitably be obtained from, for instance, the fruits, stems, leaves, flowers or roots of plants, wherein "plants" are understood to comprise vegetables, fruits, legumes. The present invention also encompasses the use of a plant-derived starting material that has been produced by diluting plant materials, e.g. by diluting partially or fully dehydrated plant materials. Also encompassed by the invention is the use of a starting material containing one or more plant materials that have been pre-concentrated by water removal.

The term "reducing monosaccharides" as used herein refers to monosaccharides that either have an aldehyde group or are capable of forming one in aqueous solution through isomerism. Typical reducing monosaccharides are glucose, fructose, glyceraldehyde and galactose.

The term "free amino acid" as used herein refers to amino acids that are not covalently bonded to another amino acid, i.e. not part of a peptide or a protein.

The term "pectin" as used herein refers to the complex heterogeneous polysaccharides characterized by having a backbone consisting of a linear polymer of galacturonic acid that are present in the primary cell walls, in particular in the non-woody parts, of most terrestrial plants.

The term "melanoidin' as used herein refers to brown, high molecular weight heterogeneous polymers that are formed when sugars and amino acids combine (through the Maillard reaction) at high temperatures. Melanoidins are characterized by a broad absorption in the blue and green part of the electromagnetic spectrum. Absorption at 405 nm can suitably used to monitor formation of melanoidins (E.K. Bekedam et al., High molecular weight melanoidins from coffee brew, J. Agric. Food Chem. 2006, 54, p. 7658-7666).

The formation of melanoidins in the process of the invention is assessed by monitoring the optical absorbance at 405 nm ($A_{405}$) of the emulsifying agent in a water-diluted sample having a dry-matter content of 0.5 wt% and relating it to the absorbance at the same wavelength and same dry matter content of the starting material. The absorbance is measured using a Uvikon XL spectrophotometer (Secomam) and a quartz cuvette having an optical pathlength of 10 mm. Herein, absorbance is defined as the 10-base logarithm of the ratio of incident light ($I_0$) on the sample to light transmitted (It) by the sample ($_{10}log[I_0/I_t]$). Absorbance can be measured by common UV/vis absorption techniques that are known to the skilled person.

The reducing monosaccharides employed in the present process are preferably selected from glucose, fructose, galactose and combinations thereof. Even more preferably, the reducing monosaccharides are selected from glucose, fructose and combinations thereof.

The concentration of reducing monosaccharides in the starting material preferably is at least 4 wt%, more preferably at least 5 wt.% and most preferably at least 7 wt.%.

Calculated by weight of dry matter, the concentration of reducing monosaccharides in the starting material typically lies in the range of 5-95 wt%, more preferably 10-94 wt.% and most preferably 20-92 wt.%.

The phenolic compounds in the starting material are preferably selected from flavonols, flavanols, anthocyanidins, flavones, flavanones, isoflavones, stilbenes, lignans, phenolic acids and glycosides of these substances and combinations thereof. Most preferably, the phenolic compounds are selected from flavonols, flavanols, anthocyanidins and their glycosides.

Flavonols belong to the subclass of flavonoids that have a 3-hydroxyflavone backbone (IUPAC name: 3-hydroxy-2-phenylchromen-4-one). Flavonols are present in a wide variety of fruits and vegetables, in particular in onions, apples, berries, kale, and broccoli.

Flavanols are compounds similar to flavonols, that are characterized by having a 2-phenyl-3,4-dihydro-2H-chromen-3-ol skeleton. Flavanols are present in high concentrations in cocoa and tea leaves.

Anthocyanidins and anthocyanins (also anthocyans) belong the subclass of flavonoids that are synthesized via the phenylpropanoid pathway, and are red or blue (depending on pH) pigments. Anthocyanins occur in all tissues of higher plants, including leaves, stems, roots, flowers, and fruits. Plants rich in anthocyanins are purple corn, blueberry, cranberry, bilberry, *Rubus* berries, including black raspberry, red raspberry, blackberry, blackcurrant, cherry, eggplant peel, black rice, grapes, red-fleshed peaches and red cabbage. Furthermore, tomatoes have been bred conventionally for high anthocyanin content by crossing wild relatives with the common tomato.

Anthocyanidins are the sugar-free counterparts of anthocyanins. Anthocyanidins, also known as flavylium cation, and usually occur as the chloride salt of said cation.

Examples of anthocyanidins that can be used include cyanidins, delphinidins, peonidins, malvidins and pelargodinins. Flavonols that can be used include quercetins, kampferols and myricetins. Flavanols that can suitably be employed include catechins, gallocatechins, catechin gallates, and procyanidins. Examples of suitable flavanones include naringenin and hesperetin. An example of a suitable stilbene is resveratrol. Flavones such as luteolin and apigenin can also suitably be used. The use of glycosides of these phenolic compounds is also encompassed by the present invention.

The plant-derived starting material preferably contains at least 0.01 %, more preferably at least 0.05%, even more preferably at least 0.08% and most preferably at least 0.1 % of the phenolic compounds by weight of the starting material.

Typically, the starting material contains 0.05-40% of the phenolic compounds by weight of dry matter. Preferably, the starting material contains 0.08-20 wt.%, more preferably 0.1-10 wt.% and most preferably 0.5-5 wt.% of the phenolic compounds by weight of dry matter.

It is preferred that w/w ratio of the one or more phenolic compounds to fructose is at least 1:400. Even more preferably said ratio is in the range of 1:200 to 2:1, most preferably of 1:100 to 1:1.

It is further preferred that the w/w ratio of the one or more phenolic compounds to the one or more reducing monosaccharides is at least 1:600, more preferably in the range of 1:400 to 1:1, most preferably of 1:200 to 1:2.

Suitable free amino acids for use in the process according to the invention include alanine, isoleucine, leucine, phenylalanine, valine, proline, tryptophan, methionine, glycine, cysteine, tyrosine, glutamic acid, pyroglutamate and combinations thereof. Particularly preferred free amino acids are glutamic acid, proline, alanine, valine, tyrosine, leucine and phenylalanine.

The plant derived material typically contains at least 0.04%, more preferably at least 0.06% and most preferably at least 0.1 % of the one or more free amino acids by weight of the starting material.

Calculated on dry matter, the starting material typically contains 0.2-10% of the one or more free amino acids. More preferably, the starting material contains 0.3-8%, most preferably 0.5-6% of the one or more free amino acids by weight of dry matter.

The plant-derived starting material of the present invention contains substantial levels of (cell wall) pectin. Typically, the starting material contains at least 0.05%, more preferably at least 0.1 % and most preferably at least 0.3% pectin by weight of the starting material.

It is preferred that the starting material contains 0.1-30 wt.%, more preferably 0.5-20, most preferably 0.8-10 wt.% of pectin by weight of dry matter.

The pectin contained in the starting material typically is essentially non-hydrolyzed prior to the heating step of the present process. Preferably, prior to the heating step, the average molecular weight of (extractable) pectin exceeds 30,000 g/mol, more preferably it exceeds 50,000, even more preferably it exceeds 60,000 g/mol and most preferably it exceeds 100,000 g/mol.

Advantageously, the reducing monosaccharides and pectin are present in the plant-derived starting material in a w/w ratio of pectin to the one or more reducing monosaccharides of at least 1:80. Preferably, the w/w ratio of pectin to the one or more reducing monosaccharides is at least 1:50, more preferably at least 1:20, and most preferably at least 1:5.

In another preferred embodiment, the w/w ratio of pectin to fructose in the plant-derived starting material is at least 1:50, more preferably at least 1:35, most preferably at least 1:25. It is also preferred that the w/w ratio of pectin to glucose in the plant-derived starting material is at least 1:50, more preferably at least 1:25.

It is further preferred that the w/w ratio of the one or more phenolic compounds to pectin is in the range of 1:50 to 50:1, more preferably 1:20 to 20:1. Even more preferably, said ratio is in the range of 1:10 to 10:1.

Approximate concentrations for glucose, fructose, pectin and phenolic compounds present in some selected plant materials are provided below.

| Plant material | Glucose (g/100g) | Fructose (g/100g) | Pectin (water-extractable) (g/100g) | Phenolic compounds (g/100g) |
|---|---|---|---|---|
| Tomato | 0.9 | 1.0 | 0.38 | 0.002 |
| Onion | 2.3 | 2.0 | 0.40 | 0.05 |
| Red grape | 7.2 | 8.1 | 0.75 | 0.05 |
| Elderberry | 4.0 | 4.0 | 0.15 | 0.8 |
| Cranberry | 3.0 | 3.0 | 0.65 | 0.12 |
| Apple | 2.4 | 5.9 | 0.53 | 0.015 |

(continued)

| Plant material | Glucose (g/100g) | Fructose (g/100g) | Pectin (water-extractable) (g/100g) | Phenolic compounds (g/100g) |
| --- | --- | --- | --- | --- |
| Blueberry | 2.0 | 3.0 | 0.41 | 0.215 |

The starting material of the present process typically is composed of one or more plant-derived components selected from juice, paste, pulp, puree and serum. According to a particularly preferred embodiment at least 80 wt.%, more preferably at least 90 wt.% and most preferably at least 95 wt.% of the dry matter contained in the starting material is provided by one or more plant-derived components selected from juice, paste, pulp and serum. Examples of such plant-derived components are apple juice, tomato paste, onion pulp, berry puree, tomato paste, tomato juice and tomato serum.

As explained herein before, formation of melanoidins in the present process can be monitored by measuring the optical absorbance at 405 nm ($A_{405}$), using the methodology described herein before. Preferably, $A_{405}$ of the emulsifying agent is at least 0.1 units higher than that of the starting material. Even more preferably, the process of the invention produces emulsifying agent with an $A_{405}$ that is at least 0.2, most preferably at least 0.4 units higher than that of the starting material.

According to a preferred embodiment of the present process at least 50 wt.%, more preferably at least 80 wt.% and most preferably at least 95 wt.% of the one or more reducing monosaccharides are provided by plant material selected from apple, banana, blueberries, cherry, cranberries, currant (red and black), elderberries, grape, guava, litchi, mango, melon, orange, papaya, pear, persimmon, pineapple, quince, starfruit, carrot, cucumber, egg plant, fennel, kale, kohl rabi, leek, onion, pumpkin, red cabbage, tomato and combinations thereof.

According to another advantageous embodiment, at least 50 wt.%, more preferably at least 80 wt.% and most preferably at least 95 wt.% of the phenolic compounds are provided by plant material selected from apple, grapes, elderberries, cranberries, blueberries, chokeberries, bilberries, raspberries, blackberries, cherries, currants, plums, capers, kale, (red) onions, oregano, parsley, lovage, cow peas, tea leaves, cocoa beans, fennel and combinations thereof.

In a particularly preferred embodiment of the present process at least 50 wt.%, more preferably at least 80 wt.% and most preferably at least 95 wt% of the combination of the one or more reducing monosaccharides, the one or more free amino acids, the phenolic compounds and pectin in the starting material is provided by plant material selected from apple, banana, blueberries, cherry, cranberries, currant (red and black), elderberries, grape, guava, litchi, mango, melon, orange, papaya, pear, persimmon, pineapple, quince, starfruit, carrot, cucumber, egg plant, fennel, kale, kohl rabi, leek, onion, pumpkin, red cabbage, tomato cranberries, blueberries, chokeberries, bilberries, raspberries, blackberries, cherries, currants, plums, capers, kale, (red) onions, oregano, parsley, lovage, cow peas, tea leaves, cocoa beans, fennel and combinations thereof.

Even more preferably, process at least 50 wt.%, more preferably at least 80 wt.% and most preferably at least 95 wt% of the combination of the one or more reducing monosaccharides, the one or more free amino acids, the phenolic compounds and pectin in the starting material is provided by plant material selected from carrot, cucumber, egg plant, fennel, kale, kohl rabi, leek, onion, pumpkin, red cabbage, tomato, kale, oregano, parsley, lovage, cow peas, fennel and combinations thereof.

Most preferably, at least 50 wt.%, more preferably at least 80 wt.% and most preferably at least 95 wt% of the combination of the one or more reducing monosaccharides, the one or more free amino acids, the phenolic compounds and pectin in the starting material is provided by plant material selected from carrot, egg plant, leek, onion, pumpkin, tomato and combinations thereof

Of the dry matter contained in the starting material typically less than 40 wt.%, more preferably less than 20 wt.% and most preferably less than 10 wt.% is derived from grapes.

In an advantageous embodiment of the present invention the process utilizes a plant material that that can provide the one or more reducing monosaccharides, the phenolic compounds and the free amino acids in the concentrations required. Examples of such plant materials are apple, elderberries, cranberries, blueberries and berries. Accordingly, in a preferred embodiment, the starting material contains sufficient plant material derived from apple and/or berries to provide the minimum concentrations of the one or more reducing monosaccharides, the phenolic compounds and the free amino acids required in the present process. Preferably, these berries are selected from elderberries, cranberries, blueberries and combinations thereof.

Typically, the starting material contains less than 10 wt.%, more preferably less than 5 wt.% oil. Herein, "oil" refers to lipids selected from the group of triglycerides, diglycerides, monoglycerides, phospholipids and free fatty acids. The term "oil" encompasses lipids that are liquid at ambient temperature as well as lipids that are partially or wholly solid at ambient temperature.

It has been found that the present process produces best results if the starting material has a pH in the range of 2.5 to 6.0, more preferably of 3.0-5.5, most preferably in the range of 3.5-5.0. The pH of the starting material may be adjusted to the desired value by the addition of a suitable base or acidulant.

The present method involves heating the starting material composition for a time period of at least 60 seconds to effect melanoidin formation. Depending on the heating temperature, typical heating times are as follows: 4 to 48 hours (80-100 °C), 1 to 12 hours (100-120 °C) and 10 to 80 minutes (120-150 °C).

Preferably, heating is carried out at a temperature in the range of 70-180 °C, more preferably in the range of 80-150 °C.

According to a particularly preferred embodiment of the present process, the starting material is heated to a temperature T (in K) during a time period t (in hours) in accordance with the following equation:

$$t \geq t_0 \times exp(k[1/T-1/T_0])$$

wherein $t_0$ is 3 hours, $k$ equals 13,500 K and $T_0$ equals 353.15 K.

Even more preferably $t_0$ is 12 hours. Most preferably $t_0$ is 48 hours.

Using this equation, for different $t_0$ values, the following t-T combinations can be calculated.

| T (K) | T (°C) | $t_0$ =48 hrs | $t_0$ =12 hrs | $t_0$ =3 hrs |
|---|---|---|---|---|
| 333 | 60 | 485 | 121 | 30 |
| 343 | 70 | 149 | 37 | 9 |
| 353 | 80 | 48 | 12 | 3 |
| 363 | 90 | 17 | 4.3 | 1 |
| 373 | 100 | 6 | 1.6 (95 min) | 0.39 (23 min) |
| 383 | 110 | 2 | 0.6 (37 min) | 0.15 (9 min) |
| 393 | 120 | 1 | 0.25 (25 min) | 0.06 (4 min) |
| 403 | 130 | 0.42 (25 min) | 0.11 (6 min) | 0.027 (95 sec) |
| 413 | 140 | 0.19 (11 min) | 0.05 (170 sec) | 0.012 (42 sec) |
| 423 | 150 | 0.09 (5 min) | 0.02 (78 sec) | 0.005 (20 sec) |

During the heating of the starting material water may evaporate. Preferably, however, water loss during heating as a result of evaporation does not exceed 20 wt.%, more preferably it does not exceed 10 wt.% and most preferably it does not exceed 5 wt.%.

It is preferred that the emulsifying agent obtained after the heating has a dry matter content of at least 5 wt.%, more preferably at least 8 wt.%, even more preferably at least 10 wt% and most preferably of at least 20 wt.%.

The starting material typically has a dry matter content of at least 3 wt.%, more preferably at least 5 wt.%, even more preferably at least 8 wt% and most preferably of at least 15 wt.%.

Advantageously, at least 5 wt.%, more preferably at least 7 wt.% and most preferably at least 10 wt.% of the one or more reducing monosaccharides are converted into reaction products such as melanoidins during the heating of the starting material.

Melanoidins typically represent at least 0.5%, more preferably at least 1% and most preferably at least 2% by weight of the dry matter contained in the emulsifying agent, said melanoidins having a molecular weight in the range of 1,000 to 100,000, preferably in the range of 5,000 to 20,000.

The starting material employed in the present process preferably contains not more than a minor amount of melanoidins before the heating step. Typically, prior to the heating step, the starting material contains less than 0.05%, more preferably less than 0.02 % and most preferably less than 0.01 % melanoidins by weight of the dry matter contained in the starting material, said melanoidins having a molecular weight in the range of 1,000 to 100,000, preferably in the range of 5,000 to 20,000.

Another aspect of the present invention relates to an emulsifying agent that is obtainable or that is obtained by the process as described herein.

Yet another aspect of the invention relates to a method of preparing an oil-in-water emulsion comprising 1-40 wt.% of a dispersed oil phase and 60-99 wt.% of a continuous aqueous phase, said method comprising adding an emulsifying agent as described herein in a concentration of 0.1-10.0%, calculated as dry matter of the emulsifying agent, by weight of the final emulsion. In a preferred embodiment, the emulsifying agent is added in a concentration of 0.1-5.0%, more preferably 0.2-4.0%, calculated as dry matter of the emulsifying agent, by weight of the final emulsion.

The dispersed oil phase comprised in the present emulsion preferably represents at least 3 wt.%, more preferably at least 5 wt.% and most preferably at least 8 wt.% of the emulsion. The dispersed oil phase comprised in the present emulsion preferably represents at most 35 wt.%, more preferably at most 30 wt.%, even more preferably at most 25 wt.%, most preferably at most 20 wt.% of the emulsion.

The dispersed oil phase typically contains 50-100 wt.%, more preferably 70-100 wt.% and most preferably 90-100 wt.% of triglycerides. The oil phase advantageously contains a high level of unsaturated fatty acids. Typically, 40-100 wt.%, more preferably 50-100 wt.% and most preferably 60-100 wt.% of the fatty acids contained in the dispersed oil phase are unsaturated fatty acids. The melting point of the dispersed oil phase typically does not exceed 30°C, more preferably it does not exceed 20°C and most preferably it does not exceed 10°C.

Typically, 80-100 vol.% of the oil droplets contained in the emulsion have a diameter of less than 30 $\mu$m, more preferably of less than 20 $\mu$m and most preferably 0.5-10 $\mu$m.

Yet another aspect of the invention relates to an oil-in-water emulsion that is obtained by the method described above. Preferably, said emulsion is selected from a soup, a sauce, a dip, a cream, a drink, ice cream, a dressing and mayonnaise. In a particularly preferred embodiment, the emulsion is a soup or a sauce comprising 1-40 wt.%, preferably 5-20 wt.% of a dispersed oil phase.

The emulsions according to the present invention typically have a shelf-life of at least 4, more preferably at least 8 weeks under ambient conditions (20°C), during which period no significant emulsion destabilisation occurs.

The invention is further illustrated by the following non-limiting examples.

EXAMPLES

Example 1

*Preparation of tomato serum*

Tomato juice was prepared from canned, whole peeled tomatoes purchased from a local supermarket (product name: Casa Italiana; composition: 1.2 wt% protein, 3.0 wt% sugars, 0.5 wt% fat and 0.04 wt% sodium). Tomatoes were put in the bowl of a Thermomix TM31 food processor equipped with a revolving knife blade and adjustable heating system (manufactured by Vorwerk, Germany) and chopped for 3 minutes at ambient temperature with blade speed set at position "3". The resulting tomato puree was then heated in the Thermomix to a temperature of 85°C and held at that temperature for 5 minutes; during heating chopping continued at a higher blade speed (position "6"). The tomato puree was cooled to ambient and further processed in a high shear mixer (Silverson, type L4RT-A, equipped with a fine emulsion screen); the Silverson mixer was operated at 7000 RPM and mixing continued for 5 minutes.

The puree obtained was further processed in a high pressure homogeniser (Niro Soavi HPH, type NS1 001 L, manufactured by GEA Niro Soavi, Italy). The puree was homogenised twice; the first pass of the product through the homogeniser was at 350 bar, the second pass at 380 bar. After homogenisation the tomato puree was centrifuged to remove any undissolved material. Centrifugation was at 10.000 g using a Beckman Avanti J-25 centrifuge. Centrifugation continued for 30 minutes, temperature during centrifugation was 20 C. A clear supernatant phase (tomato serum phase) was obtained, which was stored in a fridge until further use.

*Preparation of onion serum*

Onion juice was prepared from fresh onions purchased from a local supermarket. Two types of onions were used: sweet onions and red onions. Onions were peeled and cut into pieces using a kitchen knife. Onion pieces were added into the Thermomix (blade speed at position "3") and temperature was raised to 80°C. When the temperature of the onions reached 80°C crushing continued for 1 minute at a higher blade speed (position "6"). The hot onion puree was further processed in a Silverson mixer (equipped with a fine emulsion screen). The Silverson mixer was operated at 7000 RPM and mixing of the onions continued for 5 minutes. The onion puree was then centrifuged at 10.000 g (Beckman Avanti J-25 centrifuge) to remove any undissolved material. Centrifugation continued for 30 minutes, temperature during centrifugation was 20°C. A clear supernatant phase (onion serum phase) was obtained, which was stored in a fridge until further use.

*Composition of tomato-onion serum mixtures*

A tomato-onion serum mixture was prepared by mixing 125 g tomato serum with 62.5 g sweet onion serum and 62.5 g red onion serum. pH of the mixture was adjusted to 5.0 using 1 N NaOH.

*Maillard reaction conditions*

The serum mixture was poured into a 500 ml ISO bottle. The bottle was placed in a shaker (Innova 4080 incubator shaker) and heated to 80°C for 66 hours. The bottle was not closed during heating and water was allowed to evaporate from the bottle until the sample volume was reduced by ca. 50%. From that point onwards small amounts of millipore water were added at regular time intervals. The serum mixture turned dark brown during heating, indicating formation of Maillard reaction products, including melanoidins. After heating for 66 hours volumes were adjusted to exactly 50% of the initial sample volumes. pH of the reaction mixture after heating was 4.38.

*Emulsification procedure*

Sunflower oil was slowly added to the reaction mixture while stirring using a Silverson mixer (fine emulsion screen, 3000 RPM). After all oil was added stirring continued for another 5 minutes at 7000 RPM. Oil content of the emulsion was 20% on weight. The emulsion was stored at 5 °C; emulsion stability and oil droplet size were evaluated using optical microscopy at different times after sample preparation. The sample was also visually inspected for presence of free oil.

*Results*

The emulsion was visually inspected after 2 and 6 weeks storage at 5 °C. No free oil was observed during these visual inspections.
The emulsion was further evaluated using an optical microscope (Morphology G3S, Malvern Instruments). Microscope observations were made without using cover glasses. The sample was found to show a broad distribution of oil droplet sizes, estimated size range: 50 to > 75 $\mu$m diameter, no coalescence events were observed under the microscope. The emulsion was considered to be stable, despite the relatively large oil droplets.

Example 2

Elderberry juice (brand name: Rabenhorst, 75% pure elderberry juice, water, 13.5% sugars, 0.2% protein) and cranberry juice (brand name: Natufood, 30% pure cranberry juice, water, grape juice concentrate, 11 % sugars, 0% protein) were purchased from a local supermarket.
The juices were poured into 500 ml ISO bottles. The bottles were placed in a shaker (Innova 4080 incubator shaker) and heated to 80 °C for 92 hours. The bottles were not closed during heating and water was allowed to evaporate from the bottles until the sample volume was reduced to ca. 50%. From that point onwards small amounts of millipore water were added at regular time intervals. After heating for 92 hours volumes were adjusted to exactly 50% of the initial sample volumes.
Emulsions were made as follows. Soy bean oil was slowly added to the heated berry juices while stirring with a Silverson mixer (fine emulsion screen). After all oil was added stirring continued for another 5 minutes at 4600 RPM. The oil content of the emulsions was 20% on weight. Emulsions were stored at 5 °C. Emulsion stability and oil droplet size were evaluated using optical microscopy at different times after sample preparation. Samples were also visually inspected for presence of free oil.
Observations: emulsions were visually inspected after 1 day and 1 week storage at 5°C. None of the samples showed formation of a free oil layer on top. Emulsions made from elderberry juice showed small droplet sizes (5-10 $\mu$m diameter) when inspected under a microscope; no coalescence events were observed. Emulsions made from cranberry juice showed bigger droplet sizes (estimated average droplet diameter: 30-40 $\mu$m), but no coalescence events were observed under the microscope. Both emulsions are considered stable against coalescence.

Example 3

Apple juice (brand name: Flevosap, 100% pure juice without additions, 8.2-11 % sugars, 0.1 % protein) was purchased from a local supermarket. Tea extract was prepared as follows: 5 gram Lipton black tea powder was dispersed in 100 ml water at ambient temperature and stirred for 24 hours. The tea powder dispersion was filtered and the (clear) filtrate phase was used in the experiment.
Apple juice and a mixture of apple juice and tea filtrate phase (mixed in a ratio of 85:15 based on volume) were poured into 500 ml ISO bottles, placed in a shaker (Innova 4080 incubator shaker) and heated to 80 °C for 92 hours. The bottles were not closed during heating and water was allowed to evaporate from the bottles until the sample volume was reduced to ca. 50%. From that point onwards small amounts of millipore water were added at regular time intervals. After heating for 92 hours volumes were adjusted to exactly 50% of the initial sample volumes.

Emulsions were made as follows. Soy bean oil was slowly added to the heated juices while stirring with a Silverson mixer (fine emulsion screen). After all oil was added stirring continued for another 5 minutes at 4600 RPM. The oil content of the emulsions was 20% on weight. Emulsions were stored at 5 °C. Emulsion stability and oil droplet size were evaluated using optical microscopy at different times after sample preparation. Samples were also visually inspected for presence of free oil.

Observations: emulsions were visually inspected after 1 day and 1 week storage at 5 °C. None of the samples showed formation of a free oil layer on top. Average oil droplet size was estimated from microscopic observations to be 30-40 μm for emulsions prepared from apple juice; slightly smaller droplet sizes were observed for emulsions prepared from mixtures of apple juice and tea extract. Both emulsions are considered stable against coalescence.

Example 4

Apple juice (brand name: Flevosap ex Fruitkwekerij Vermeulen, 100% pure juice without additions, 8.2-11 % sugars, 0.1 % protein) was purchased from a local supermarket. Fresh red grapes (Crimson Seedless, with skin, without stones) and fresh blue berries (with skin) were pureed using a Braun hand blender and passed through a fine sieve (120 μm) to remove non-dissolved material.

Apple juice, grape juice and blue berry juice were mixed in a 1:1:1 ratio (based on weight). The mixture was split into two portions: one portion was refrigerated and stored until further use. The other portion was poured into an ISO bottle and placed in a shaker (Innova 4080 incubator shaker). The sample bottle was covered to prevent evaporation of water and heated to 80°C for 60 hours. After heating the mixture had turned dark brown indicating formation of Maillard reaction products (melanoidins).

Emulsions were made as follows. Sunflower oil was slowly added to the heated and non-heated mixture while stirring using a Silverson mixer (fine emulsion screen, 3000 RPM). After all oil was added stirring continued for another 5 minutes at 7000 RPM. The oil content of the emulsions was 20% on weight. Emulsions were stored at 5 °C. Oil droplet sizes were evaluated using optical microscopy after storing the emulsions for 2 weeks.

Observations: emulsions made from unheated mixtures of apple, grape and blue berry juice showed very large oil droplet sizes (> 100 μm). Coalescence events were observed under the microscope. These emulsions were considered unstable.

Emulsions made from heated mixtures of apple, grape and blueberry juice showed much smaller droplet sizes (estimated droplet diameters: 10-20 μm) and no coalescence events were observed; these emulsions were considered stable.

Example 5

Model experiments were conducted to investigate the interaction between reducing sugars, phenolic compounds and free amino acids when heated in an aqueous solution to produce substantial quantities of melanoidins.

amino acids
ARG = arginine
GLN = glutamine
PRO = proline
ALA = alanine

reducing monosaccharides
FRU = fructose
GLU = glucose

phenolic compounds
GAL = gallic acid monohydrate
EGCG = epigallocatechin gallate
80SK = green tea extract, mixture of green tea phenols (Taiyo Green Power Co. Ltd, Wuxi, China)

*Preparation of emulsifying agent*

Amino acids, monosaccharides and phenolic compounds are dissolved in millipore water. pH is adjusted to 3.5 using concentrated HCl. Samples are placed in a shaker and heated to 80°C for 92 hours. Sample bottles are covered to avoid evaporation during heating. Reaction samples are cooled and stored in a fridge until further use.

*Emulsification procedure*

Sunflower oil is slowly added to the reaction mixtures under stirring using a Silverson mixer (fine emulsion screen, 3000 RPM). After all oil is added stirring continues for another 5 minutes at 7000 RPM. The pre-emulsions obtained is homogenized at 200 bar. Emulsions are stored at 5°C. Emulsion stability and oil droplet size are evaluated using optical microscopy at different times after sample preparation. Samples are also visually inspected for presence of free oil.

*Starting material composition*

Composition of the Maillard reaction mixtures is given in Table 1. Samples 1 to 7 were prepared according to the standard protocol described above; Sample A is a control sample that unlike the other samples was not heated, i.e. no Maillard reactions occurred in this sample.

Table 1

| Sample | ARG mol/l | GLN mol/l | PRO mol/l | ALA mol/l | FRU mol/l | GLU mol/l | GAL g/l | EGCG g/l | 80SK g/l |
|---|---|---|---|---|---|---|---|---|---|
| 1 | 0.25 | 0.25 | | | 1.0 | 1.0 | | | |
| 2 | 0.25 | 0.25 | | | 1.0 | 1.0 | 0.2 | 0.2 | 0.4 |
| 3 | 0.25 | 0.25 | | | 1.0 | 1.0 | 0.4 | 0.4 | 0.8 |
| 4 | 0.25 | 0.25 | | | 1.0 | 1.0 | 1 | 1 | 2 |
| 5 | 0.25 | 0.25 | | | 1.0 | 1.0 | 2 | 2 | 4 |
| 6 | 0.25 | 0.25 | 0.25 | 0.25 | 1.0 | 1.0 | | 2 | 4 |
| 7 | 0.25 | 0.25 | | | | | | 2 | 4 |
| A | 0.25 | 0.25 | | | 1.0 | 1.0 | 2 | 2 | 4 |

*Absorbance ($A_{405}$)*

The absorbance $A_{405}$ of the Maillard reaction mixtures of samples 1 and 5 was determined using a Uvikon XL spectrophotometer (Secomam). Quartz cuvettes having an optical pathlength of 10 mm were used as measuring cell. In those cases where progressive melanoidin formation resulted in an optical absorbance at 0.5 wt.% dry matter content exceeding the spectrophotometer detection limit, quartz cuvettes having an optical pathlength of 1 mm were used, and the absorbance was recalculated to an optical pathlength of 10 mm. The optical absorbance $A_{405}$ of the starting materials in a water-diluted sample having a dry matter content of 0.5 wt.% was close to zero.
The results are depicted in Table 2.

Table 2

| Sample | $A_{405}$ (in units) after 48 h heating | $A_{405}$ (in units) after 92 h heating |
|---|---|---|
| 1 | 0.31 | 1.13 |
| 5 | 0.54 | 1.04[#] |
| # This sample displayed turbidity, probably as a result of precipitation of melanoidins. This conclusion is supported by the fact that up to 48 hours of heating $A_{405}$ increased steadily. On the basis of this steady increase in absorption the extrapolated $A_{405}$ after 92 hours is 2.5. | | |

*Emulsion properties*

Emulsions were visually inspected after 24 hrs and 6 months storage. Samples 1, 7 and A showed formation of a free oil layer on top of the emulsion within 24 hours. Formation of a free oil layer is considered to be an indication of emulsion instability. Emulsion samples that developed a free oil layer on top were fully separated into oil and water phases after 6 months storage. Samples that did not show formation of a free oil layer within 24 hours were still stable after 6 months storage. All samples showed creaming (i.e. formation of a concentrated oil droplet layer at the top of the emulsion); creaming is not considered to be an indication of emulsion instability. Results are summarized in Table 3.

Table 3

| Sample | After 24 hrs | After 6 months |
|---|---|---|
| 1 | Not stable, free oil on top | Complete phase separation |
| 2 | Stable | Stable |
| 3 | Stable | Stable |
| 4 | Stable | Stable |
| 5 | Stable | Stable |
| 6 | Stable | Stable |
| 7 | Not stable, free oil on top | Complete phase separation |
| A | Not stable, free oil on top | Complete phase separation |

Optical microscopy was used to evaluate the microstructure of the emulsion samples. Sample 1 was found to show a wide range of oil droplet sizes (diameters ranging from 20 to 60 $\mu$m), free oil and indications of droplet coalescence. Samples 2, 3 and 4 showed finely dispersed oil droplet and no signs of free oil or emulsion instability. The average droplet size of the samples decreased in the order sample 2 > sample 3 > sample 4 (i.e. droplet size decreased with increasing amount of phenolic compounds added to the Maillard reaction mixture).

**Claims**

1.  A process of preparing an emulsifying agent, said process comprising:

    • providing a plant-derived starting material containing:

      ○ 3-40 wt.% of one or more reducing monosaccharides;
      ○ 0.005-10 wt.% of one or more phenolic compounds, said phenolic compounds being selected from flavonols, flavanols, flavanones, flavones, isoflavones, stilbenes, lignans, phenolic acids, anthocyanidins, glycosides of these substances and combinations thereof;
      ○ 0.02-2.5 wt.% of one or more free amino acids;
      ○ 0.03-10 wt.% of pectin; and
      ○ 50-95 wt.% of water;

    wherein the w/w ratio of pectin to the one or more reducing monosaccharides is at least 1:100, and the w/w ratio of the one or more phenolic compounds to the one or more reducing monosaccharides is at least 1:800
    • heating the starting material to a temperature of at least 60 °C for at least one minute to produce an emulsifying agent;

    wherein at least 95% of the dry matter contained in the starting material is plant-derived and less than 50% of the dry matter contained in the starting material is derived from grapes; and
    wherein the absorbance at 405 nm ($A_{405}$) of the emulsifying agent is at least 0.05 units higher than that of the starting material, said absorbance being measured in a water-diluted sample having a dry matter content of 0.5 wt.%, using a cuvette having a pathlength of 10 mm.

2.  Process according to claim 1, wherein at least 80 wt.% of the dry matter contained in the starting material is provided by one or more plant-derived components selected from juice, paste, pulp and serum.

3.  Process according to claim 1 or 2, wherein the w/w ratio of pectin to the one or more reducing monosaccharides is at least 1:80, preferably at least 1:50.

4.  Process according to any one of the preceding claims, wherein the w/w ratio of the one or more phenolic compounds to the one or more reducing monosaccharides is at least 1:600, preferably at least 1:400 and at most 1:1.

5. Process according to any one of the preceding claims, wherein less than 20% of the water contained in the starting material is removed by evaporation during the heating.

6. Process according to any one of the preceding claims, wherein the starting material contains 0.2-10% of the amino acids by weight of dry matter.

7. Process according to any one of the preceding claims, wherein the starting material contains 0.05-40% of the phenolic compounds by weight of dry matter.

8. Process according to any one of the preceding claims, wherein the starting material contains 5-95% of the one or more reducing monosaccharides by weight of dry matter.

9. Process according to any one of the preceding claims, wherein the starting material contains 0.1-30 wt.% of pectin by weight of dry matter.

10. Process according to any one of the preceding claims, wherein at least 50 wt.% of the one or more reducing monosaccharides are provided by plant material selected from apple, banana, blueberries, cherry, cranberries, currant (red and black), elderberries, grape, guava, litchi, mango, melon, orange, papaya, pear, persimmon, pineapple, quince, starfruit, carrot, cucumber, egg plant, fennel, kale, kohl rabi, leek, onion, pumpkin, red cabbage, tomato and combinations thereof.

11. Process according to any one of the preceding claims, wherein at least 50 wt.% of the phenolic compounds are provided by plant material selected from apple, grapes, elderberries, cranberries, blueberries, chokeberries, bilberries, raspberries, blackberries, cherries, currants, plums, capers, kale, (red) onions, oregano, parsley, lovage, cow peas, tea leaves, cocoa beans, fennel and combinations thereof.

12. Process according to any one of the preceding claims, wherein the starting material is heated to a temperature T (in K) during a time period t (in hours) in accordance with the following equation:

$$t \geq t_0 \times exp(k[1/T-1/T_0])$$

wherein $t_0$ is 3 hours, $k$ equals 13,500 K and $T_0$ equals 353.15 K.

13. An emulsifying agent that is obtained by a process according to any one of the preceding claims.

14. A method of preparing an oil-in-water emulsion comprising 1-40 wt.% of a dispersed oil phase and 60-99 wt.% of a continuous aqueous phase, said method comprising adding an emulsifying agent according to claim 13 in a concentration of 0.1-10%, calculated as dry matter of the emulsifying agent, by weight of the final emulsion.

15. An oil-in-water emulsion that is obtained by the method according to claim 14.

Europäisches
Patentamt

European
Patent Office

Office européen
des brevets

# EUROPEAN SEARCH REPORT

Application Number

EP 13 15 8335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J.E. LOZANO ET AL: "Colour changes in concentrated fruit pulp during heating at high temperatures", JOURNAL OF FOOD ENGINEERING, vol. 31, no. 3, 1 February 1997 (1997-02-01), pages 365-373, XP055068519, ISSN: 0260-8774, DOI: 10.1016/S0260-8774(96)00079-9 | 1-13 | INV. A23L1/39 A23D7/005 A23L1/035 A23L1/212 A23L1/227 A23L1/24 |
| Y | * the whole document * | 14,15 | |
| X | VAIKOUSI ET AL: "Kinetic modelling of non-enzymatic browning of apple juice concentrates differing in water activity under isothermal and dynamic heating conditions", FOOD CHEMISTRY, ELSEVIER LTD, NL, vol. 107, no. 2, 19 November 2007 (2007-11-19), pages 785-796, XP022351979, ISSN: 0308-8146, DOI: 10.1016/J.FOODCHEM.2007.08.078 | 1-13 | |
| Y | * the whole document * | 14,15 | TECHNICAL FIELDS SEARCHED (IPC) A23L A23D |
| X,D | AN ADAMS ET AL: "Thermal Degradation Studies of Food Melanoidins", JOURNAL OF AGRICULTURAL AND FOOD CHEMISTRY, vol. 53, no. 10, 1 May 2005 (2005-05-01), pages 4136-4142, XP055068689, ISSN: 0021-8561, DOI: 10.1021/jf047903m | 1-10,12, 13 | |
| A | * the whole document * | 14,15 | |

-/--

The present search report has been drawn up for all claims

| Place of search | Date of completion of the search | Examiner |
|---|---|---|
| Munich | 8 July 2013 | Krajewski, Doris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 13 15 8335

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IBARZ A ET AL: "Photochemical destruction of color compounds in fruit juices", JOURNAL OF FOOD ENGINEERING, BARKING, ESSEX, GB, vol. 69, no. 2, 1 July 2005 (2005-07-01), pages 155-160, XP027609685, ISSN: 0260-8774 [retrieved on 2005-07-01] * the whole document * | 1-13 | |
| X | Anonymous: "Tomato soup made with canned tomatoes?", Internet , 13 December 2007 (2007-12-13), pages 1-1, XP002699804, Retrieved from the Internet: URL:http://chowhound.chow.com/topics/46915 1 [retrieved on 2013-07-01] * the whole document * | 14,15 | |
| Y | WO 2009/006948 A1 (MURPHY MICHAEL LAURENCE [IE]; MURPHY TIMOTHEA MIRIAM [IE]; MURPHY LORC) 15 January 2009 (2009-01-15) * page 7, line 1 - page 15, line 8; claims 1-27 * | 14,15 | TECHNICAL FIELDS SEARCHED (IPC) |
| Y | KATO A: "Industrial application of Maillard-type protein-polysaccharide conjugates.", FOOD SCIENCE AND TECHNOLOGY RESEARCH, vol. 8, no. 3, 2002, pages 193-199, XP002699740, * the whole document * | 14,15 | |

-/--

The present search report has been drawn up for all claims

| Place of search | Date of completion of the search | Examiner |
|---|---|---|
| Munich | 8 July 2013 | Krajewski, Doris |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

Europäisches
Patentamt

European
Patent Office

Office européen
des brevets

## EUROPEAN SEARCH REPORT

Application Number

EP 13 15 8335

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2010/110269 A1 (KIKKOMAN CORP [JP]; SUZUKI SOUJI [JP]; SAIGUSA TSUNAHIKO [JP]; UCHIDA) 30 September 2010 (2010-09-30) * the whole document * | 14,15 | |
| A | ECHAVARRIA A P ET AL: "Melanoidins formed by maillard reaction in food and their biological activity.", FOOD ENGINEERING REVIEWS, vol. 4, no. 4, 10 August 2012 (2012-08-10) , pages 203-223, XP002699741, * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 8 July 2013 | Krajewski, Doris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 8335

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2013

| Patent document cited in search report | Publication date | Patent family member(s) | | Publication date |
|---|---|---|---|---|
| WO 2009006948 A1 | 15-01-2009 | AT | 541030 T | 15-01-2012 |
| | | AU | 2007356356 A1 | 15-01-2009 |
| | | CA | 2688572 A1 | 15-01-2009 |
| | | EP | 2038400 A1 | 25-03-2009 |
| | | EP | 2330180 A2 | 08-06-2011 |
| | | IE | 20070874 A1 | 01-04-2009 |
| | | NZ | 582347 A | 25-05-2012 |
| | | US | 2010189873 A1 | 29-07-2010 |
| | | WO | 2009006948 A1 | 15-01-2009 |
| | | ZA | 200908246 A | 28-07-2010 |
| WO 2010110269 A1 | 30-09-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010110269 A

- GB 1273124 A

**Non-patent literature cited in the description**

- **ADAMS et al.** Thermal Degradation Studies of Food Melanoidins. *J. Agric. Food Chem.,* 2005, vol. 53, 4136-4142

- **E.K. BEKEDAM et al.** High molecular weight melanoidins from coffee brew. *J. Agric. Food Chem.,* 2006, vol. 54, 7658-7666